# EUROPÄISCHE PATENTSCHRIFT

(11) **EP 1 758 769 B1**
(45) Veröffentlichungstag und Bekanntmachung des Hinweises auf die Patenterteilung: **19.12.2007**
(21) Anmeldenummer: 05747183.1
(22) Anmeldetag: 11.04.2005
(51) Int. Cl.: B60R 21/01

(54) **VERFAHREN UND VORRICHTUNG ZUM AKTIVIEREN VON ZUSATZFUNKTIONEN BEI EINEM ÜBERROLLVORGANG EINES FAHRZEUGS**
METHOD AND DEVICE FOR ACTIVATING ADDITIONAL FUNCTIONS DURING A ROLLOVER ACTION OF A MOTOR VEHICLE
PROCEDE ET DISPOSITIF POUR ACTIVER DES FONCTIONS SUPPLEMENTAIRES EN CAS DE CAPOTAGE D'UN VEHICULE

(30) Priorität: 09.06.2004 DE 102004028091
(43) Veröffentlichungstag der Anmeldung: 07.03.2007
(73) Patentinhaber: ROBERT BOSCH GMBH, 70442 Stuttgart (DE)
(72) Erfinder: LICH, Thomas, 71409 Schwaikheim (DE); SCHMID, Michael, 70806 Kornwestheim (DE); KROENINGER, Mario, 77815 Buehl (DE)
(86) Internationale Anmeldenummer: PCT/EP2005/051585
(87) Internationale Veröffentlichungsnummer: WO 2005/120904

(56) Entgegenhaltungen:
- DE-A1- 10 000 550
- DE-A1- 10 019 416
- DE-A1- 10 019 417
- DE-A1- 10 025 260

## Beschreibung

### STAND DER TECHNIK

Die vorliegende Erfindung betrifft ein Verfahren und eine Vorrichtung zum Bestimmen eines Überrollvorgangs eines Fahrzeugs zum Aktivieren von Zusatzfunktionen.

Die Bedeutung der passiven Sicherheit bei Fahrzeugüberrollvorgängen ist sehr hoch, da ein großer Anteil von tödlichen Einzelfahrzeug-Unfällen auf einen Überschlag zurückgeführt werden kann. Im gesamten Unfallgeschehen nimmt der Fahrzeugäberschlag oder -überrollvorgang zur Zeit einen Anteil von rund 20 Prozent ein.

Vor diesem Hintergrund sind neue Konzepte für die Überrollsensierung entwickelt worden, welche zum Beispiel einen Fahrzeugüberschlag bereits zu einem frühen Zeitpunkt erkennen können. Damit wird gewährleistet, dass Sicherheitsvorrichtuagen wie Gurtstraffer, Kopfairbag und Überrollbügel rechtzeitig aktiviert werden und ein Verletzungsrisiko verringert wird.

Die Druckschriften DE 100 19 416 A1 die den Oberbegriff der Patentansprüch 1 und 10 beschreibt, DE 100 19 417 A1 und DE 100 19 418 A1 beschreiben Verfahren beziehungsweise Vorrichtungen, welche auf der Auswertung eines Drehratensensors und zweier Beschleunigungssensoren basieren, die im zentralen Airbagsteuergerät angeordnet sind. Der Drehratensensor ermittelt nach dem Kreiselprinzip die Rotationsgeschwindigkeit um die Fahrzeuglängsachse; die Beschleunigungssensoren messen zusätzlich die Fahrzeugbeschleunigung in Quer- und Hochachse des Fahrzeugs. Im Hauptalgorithmus wird die Drehrate ausgewertet. Mit den Messwerten der Beschleunigungssensoren lässt sich zum einem die Art des Überschlags erkennen, zum anderen dienen diese Werte der Plausibilitätsprüfung. Erkennt der Drehrahenalgorithmus einen Überschlag, werden die Sicherheitsvorkehrungen nur bei gleichzeitiger Freigabe durch die Plausibilitätskontrolle aktiviert.

Ein weiteres Verfahren zur Bestimmung eines Überrollvorgangs basierend auf zwei linearen Beschleunigungssensoren sind den Patentschriften DE 196 51 124 C1 und DE 199 62 687 C2 zu entnehmen. Ein weiteres Beispiel zur Illustration stellt die DE 197 44 083 A1 dar, bei welcher zwei unabhängige Entscheidungskriterien vorliegen müssen, damit die Signale aus einer Drehratenmesseinrichtung und zwei Beschleunigungssensoren zu einer Auslösung einer Sicherheitseinrichtung führen.

Bei allen Patenten und Anmeldungen ist es das Ziel, eine Auslösung von Rückhaltesystemen bzw. Sicherheitssystemen bei einem Überrollvorgang zu aktivieren. Andere Anwendungen sind nicht bekannt.

### VORTEILE DER ERFINDUNG

Das erfindungsgemäße Verfahren und die erfindungsgemäße Vorrichtung zum Aktivieren von Zusatzfunktionen bei einem Überrollvorgang eines Fahrzeugs mit den Merkmalen der unabhängigen Patentansprüche 1 und 12 ermöglicht es, mit mindestens einem linearen Beschleunigungssensor einen Überrollvorgang zu sensieren, um damit Zusatzfunktionen zu aktivieren. Das hat den Vorteil, vorhandene Signale zur Aktivierung von zusätzlichen Funktionen verwenden zu können.

Die Grundidee der Erfindung wird im Folgenden erläutert.
Kern der Erfindung ist die Sensierung eines Überrollvorgangs mittels mindestens einem linearen Beschleunigungssensor zur Steuerung von Zusatzfunktionen, wie beispielsweise nichtsicherheitskritischen Zusatzfunktionen. So können schon vorhandene Sensorsignale im Fahrzeug für die Aktivierung zusätzlicher Funktionen verwendet und hierfür plausibilisiert werden.
Bei Verwendung von mehr als einem Beschleunigungssensor ist eine räumliche Trennung der Sensoren zueinander nicht notwendig, was einen Raumvorteil und Einsparung an Installation erbringt. Bezogen auf die Positionieren der Sensoren können diese dieselbe Einbauposition aufweisen, was gegenüber bestehenden Verfahren einen deutlichen Vorteil hat, da Ansätze mit linearen Beschleunigungen zur Erfassung der jeweiligen Wankrate oder -beschleunigung eine räumliche Trennung aufweisen müssen.

Ein wesentlicher Vorteil der Erfindung ist ein Mehrnutzen an Funktionen mit bestehender bzw. schon im Fahrzeug vorhandener Sensorik. Die im Airbagsteuergerät (y-Beschleunigungssensoren und/oder z-Beschleunigungssensoren) oder in anderen Steuergeräten wie zum Beispiel der aktiven Fahrdynamik vorhandenen Beschleunigungssensoren in lateraler Richtung (y-Achse) des Fahrzeugs können für eine einfache Überrollsensierung verwendet werden. Damit kann eine Vielzahl von Fahrzeugen mit diesen möglichen Zusatzfunktionen ausgestattet werden. Zu den Zusatzfunktionen zählen u.a.: nicht-sicherheitskritische Systeme wie Entriegelung der Türschlossautomatik, aktive Innenraumverkleidung, reversible Rückhaltemittel wie Gurtstraffer, Schließen von Fenstern und Schiebedächern, aktiver Sicherheitssitz.

Bei der Entriegelung der Türschlossautomatik ergibt sich der Vorteil, dass Sicherheitskräfte/Feuerwehr oder andere Hilfskräfte möglichst schnell und ohne Gefährdung die Insassen erreichen oder diese sich selbst einfach aus dem verunfallten Fahrzeug befreien können. Die Türverriegelung wird nämlich beispielsweise automatisch aktiviert, wenn ein Fahrzeug mit einer bestimmten Mindestgeschwindigkeit fährt oder ein Schalter im Innenraum betätigt wurde. Bei einem Überschlag wird diese Verriegelung dann automatisch wieder aufgehoben.

Das erfindungsgemäße Verfahren zum Aktivieren von Zusatzfunktionen bei einem Überrollvorgang eines Fahrzeugs mit mindestens einem Sensor und einer Steuereinrichtung, wobei der Sensor wenigstens ein unidirektionales Beschleunigungssignal liefert, analysiert mindestens eines Beschleunigungssignals in seinem Zeitverlauf; bearbeitet die analysierten Werten des mindestens einen Beschleunigungssignals; plausibilisiert der bearbeiteten Werte mit einem zweiten Signalwert; und aktiviert mindestens einer Zusatzfunktion bei einem Überrollvorgang des Fahrzeugs anhand der plausibilisierten Werte.

Vorteile ergeben sich dadurch, dass das Beschleunigungssignal im Verfahrensschritt Bearbeiten ein Integrieren des Beschleunigungssignals erfolgt, und dass der Verfahrensschritt Bearbeiten folgende Teilschritte aufweist: Vergleichen von integrierten Werten des Beschleunigungssignals mit mindestens einem vorgebbaren Schwellwert; und Ausgeben von integrierten Werten in Abhängigkeit des Vergleichens. Somit wird ein Beschleunigungssignal in Abhängigkeit von einem Überrollvorgang erkannt und von einem Signal anderer Herkunft unterschieden.

Im Verfahrensschritt Plausibilisieren erfolgt dieses mit den Werten des nicht bearbeiteten Beschleunigungssignals oder eines unabhängigen Beschleunigungssignal eines weiteren Sensors; und ein Ausgeben eines Signals oder Datenworts nach erfolgreichem Plausibilisieren wird durchgeführt. Hier wird vorteilhaft das vorhandene Beschleunigungssignal zweifach ausgewertet und ein eventuell schon vorhandenes zweites unabhängiges Signal verwendet.

Eine erweiterte Ausgestaltung der Erfindung sieht vor, dass der Verfahrensschritt Analysieren folgende Teilschritte aufweist: Vergleichen des Beschleunigungssignals mit mindestens zwei zeitlich aufeinanderfolgenden vorgebbaren zweiten und dritten Schwellwerten und Aktivieren eines weiteren zeitlichen Analysierens des Beschleunigungssignals bei positivem Vergleichsergebnis; und Vergleichen des Beschleunigungssignals mit einem vorgebbaren vierten Schwellwert und/oder einem Muster und Aktivieren des nächsten Verfahrensschritts bei positivem Vergleichsergebnis. Dadurch wird der zeitliche Ablauf des Beschleunigungssignals zur Unterscheidung von kurzzeitigen Signalen anderer Herkunft analysiert und nur das vom Überrollvorgang abhängige Signal weitergeleitet. Beim weiteren Vergleichen mit einem vierten Schwellwert bzw. einem Muster ergibt sich ebenfalls eine vorteilhafte Selektion des Beschleunigungssignals und der in ihm vorhandenen Erdbeschleunigungskomponente, deren Verlauf sinusförmig auftritt und beispielsweise im Vergleich mit Musterverläufen ermittelt werden kann. So wird in einfacher Weise aus dem Beschleunigungssignal eine weitere Information über den Überrollvorgang entnommen.

Es ist dabei vorteilhaft, dass der Verfahrensschritt Bearbeiten folgende Teilschritte aufweist:
Integrieren von Werten des Beschleunigungssignals; und Vergleichen der integrierten Werte mit einem vorgebbaren ersten Schwellwert;
Gleichzeitiges Überprüfen der Signaldauer des Beschleunigungssignals und Vergleichen der Signaldauer mit einem vorgebbaren fünften Schwellwert; und
Weiterleiten der integrierten Signalwerte bei positiven Vergleichsergebnissen aus den vorherigen beiden Teilschritten.
Ein gleichzeitiges Vergleichen und logisches Verknüpfen erbringt eine weitere Sicherheit in der Bestimmung des Überrollvorgangs, wobei schließlich dieses Signal im Verfahrensschritt Plausibilisieren mit einem im Fahrzeug schon vorhandenen Signal der Fahrzeuggeschwindigkeit plausibilisiert wird.

Eine andere Ausgestaltungsform der vorliegenden Erfindung sieht vor, dass der Verfahrensschritt Analysieren gleichzeitig zwei vorhandene Beschleunigungssignale mit jeweils mindestens zwei zeitlich aufeinanderfolgenden vorgebbaren zweiten und dritten Schwellwerten vergleicht und weiter ein zeitliches Analysieren dieser zwei Beschleunigungssignale bei positiven Vergleichsergebnissen durchführt.
Hierbei ist es besonders vorteilhaft, wenn die zwei unabhängigen Besehleunigungssignale jeweils Signale einer Beschleunigung in Richtung der Querachse und einer Beschleunigung in Richtung der Hochachse des Fahrzeugs sind. Diese werden dann parallel wie schon oben beschrieben verarbeitet, jeweils mit Schwellwerten verglichen und bei positivem Vergleich miteinander verknüpft. Eine Plausibilisierung erfolgt mit dem Signal der Fahrzeuggeschwindigkeit. Somit wird vorteilhaft ebenfalls die sinusförmige Komponente der Erdbeschleunigung in den zwei Beschleunigungssignalen genutzt, welche zeitlich betrachtet werden. Mit dieser Ausgestaltungsform kann eine hohe Aktivierungsperformance mit großer Güte für die Sensierung von Überrollvorgängen mit linearen Beschleunigungssensoren erreicht werden.

Die vorgebbaren Schwellwerte und Muster sind in einer Speichereinrichtung gespeichert und sind jeweils vorgebbar und/oder änderbar ausgeführt, so dass eine hohe Anpassung an unterschiedliche Fahrzeugtypen gewährleistet ist.

Eine Vorrichtung zum Aktivieren von Zusatzfunktionen bei einem Überrollvorgang eines Fahrzeugs mit mindestens einem Sensor und einer Steuereinrichtung, wobei der Sensor wenigstens ein unidirektionales Beschleunigungssignal liefert weist Folgendes auf: mindestens eine Einrichtung zur Analyse mindestens eines Beschleunigungssignals; mindestens eine Einrichtung zur Bearbeitung von Werten des mindestens einen Beschleunigungssignals; eine Einrichtung zur Plausibilisierung der bearbeiteten Werte; eine Einrichtung zur Bestimmung eines Überrollvorgangs des Fahrzeugs und zur Aktivierung von nicht-sicherheitsrelevanten Zusatzfunktionen; und mindestens eine Speichereinrichtung zur Speicherung von Daten für vorgebbare Schwellwerte und/oder Muster.

Die Einrichtung zur Bearbeitung weist in eine Integrationseinrichtung oder eine Filtereinrichtung für je ein Beschleunigungssignal und jeweils eine erste Vergleichseinrichtung auf.

In einer weiteren Ausführung weist die Einrichtung zur Analyse eine zweite Vergleichseinrichtung zum Vergleich des Beschleunigungssignals mit zwei unabhängigen vorgebbaren zweiten und dritten Schwellwerten und eine dritte Vergleichseinrichtung mit einem vorgebbaren vierten Schwellwert und/oder vorgebbaren Muster auf, wobei die Einrichtung zum Bearbeiten zusätzlich eine Einrichtung zum Überprüfen der Signaldauer je eines Beschleunigungssignals und jeweils eine vierte Vergleichseinrichtung und eine Einrichtung zur logischen Verknüpfung von Vergleichsergebnissen der ersten und vierten Vergleichseinrichtungen aufweist. Es ist vorteilhaft, dass diese Einrichtungen doppelt oder sogar mehrfach vorhanden sind, da dadurch eine besonders flexible Anpassung an unterschiedliche Einbausituationen gegeben ist.

Weiterhin ist es besonders vorteilhaft, dass der Sensor mindestens als ein bidirektionaler Sensor ausgebildet ist, da somit die Installation eines räumlich getrennten oder eines zweiten Sensors nicht notwendig ist.

Die Vorrichtung wird vorteilhaft in einem Fahrzeug separat oder besonders vorteilhaft als Bestandteil bzw. Aufrüstung einer schon vorhandenen Steuereinrichtung installiert, wodurch sich eine Raumersparnis ergibt.

Vorteilhafte Ausgestaltungen und Weiterbildungen der Erfindung sind den Unteransprüchen und der Beschreibung unter Bezugnahme auf die Zeichnungen entnehmbar.

### ZEICHNUNGEN

Die Erfindung wird nachfolgend anhand des in der Figur der Zeichnung angegebenen Ausführungsbeispiels näher erläutert.

Es zeigt dabei:
- FIG. 1: eine schematische Darstellung einer Ausführungsform des erfindungsgemäßen Verfahrens; und
- FIG. 2: ein Blockdiagramm einer Ausführungsform der erfindungsgemäßen Vorrichtung.

### BESCHREIBUNG DER AUSFÜHRUNGSBEISPIELE

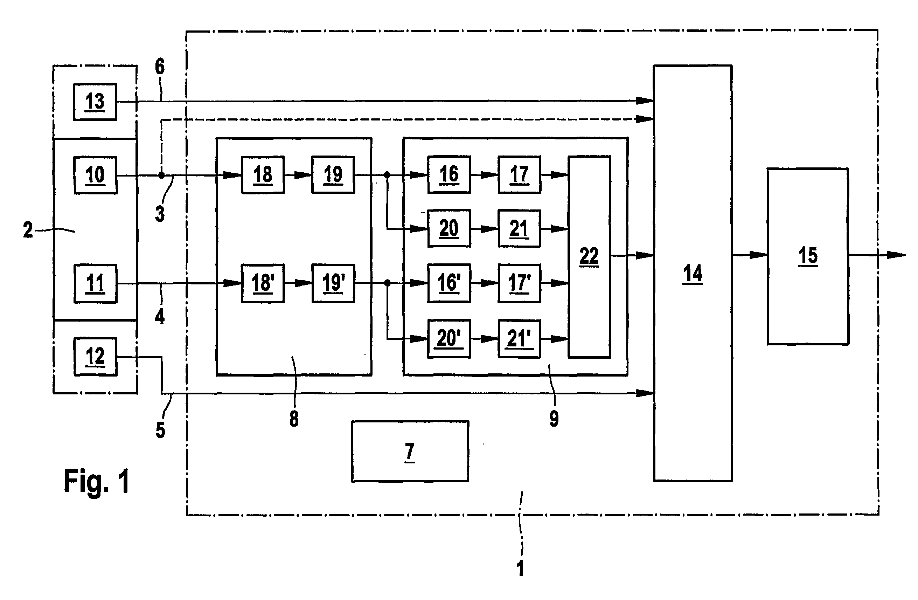

In Figur 1 ist eine Ausführungsform des erfindungsgemäßen Verfahrens zum Aktivieren von Zusatzfunktionen bei einem Überrollvorgang eines Fahrzeugs beispielhaft schematisch dargestellt.

Unter Zusatzfunktionen sind beispielsweise nicht-sicherheitskritische Systeme wie Entriegelung der Türschlossautomatik, aktive Innenraumverkleidung, reversible Rückhaltemittel wie Gurtstraffer, Schließen von Fenstern und Schiebedächern, aktiver Sicherheitssitz und dergleichen zu verstehen.

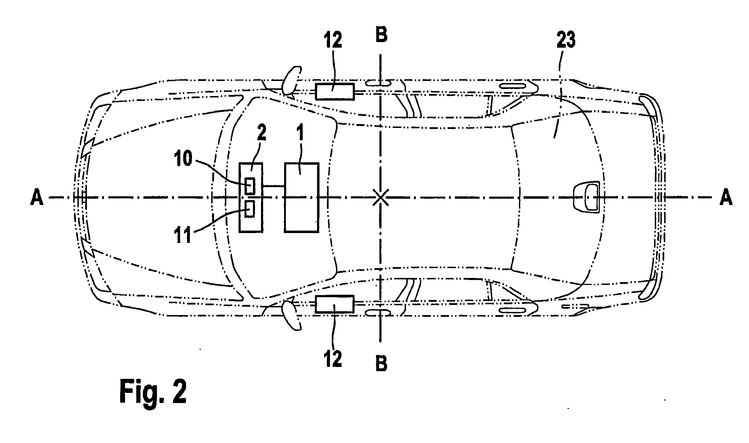

In dieser Darstellung sind drei beispielhafte Realisierungen des Verfahrens zum Aktivieren von Zusatzfunktionen bei einem Überrollvorgang eines Fahrzeugs 23 zusammengefasst dargestellt, welche nacheinander im Zusammenhang mit der Figur 2, die ein beispielhaftes Blockdiagramm einer erfindungsgemäßen Vorrichtung für das erfindungsgemäße Verfahren zeigt, erläutert werden.

Zunächst wird ein erstes Ausführungsbeispiel für die Erkennung eines Überrollvorgangs mittels eines Schwellwertvergleichs beschrieben, wobei Signale eines in einem schon im Fahrzeug 23 vorhandenen Steuergeräts, beispielsweise als ein schon vorhandenes Airbagsteuergerät mit vorhandener Sensorik, für eine einfache Überrollsensierung verwendet werden.

Mit dem Bezugszeichen 2 ist ein Steuergerät bezeichnet, zum Beispiel ein Steuergerät zur Sensierung eines seitlichen Aufpralls, und mindestens einen ersten Sensor 10 aufweist, der ein erstes Beschleunigungssignal 3 liefert, welches auch im Fall eines Überrollvorgangs auftritt, insbesondere bei einem Aufkommen des Fahrzeugs bei 90° und 180° auf einer Seite. Dieses bedeutet, dass sich das Fahrzeug 23 um diese Winkel um eine Längsachse, die mit A-A in Figur 2 bezeichnet ist, dreht.

Die Funktion von Beschleunigungssensoren und deren Signalerzeugung ist bekannt und wird nicht weiter beschrieben.

Das erste Beschleunigungssignal 3 ist hierbei die Seitenbeschleunigung in Richtung einer Querachse B-B zur Längsachse A-A des Fahrzeugs 23. Das erste Beschleunigungssignal 3 wird in seinem Zeitverlauf in einem ersten Verfahrensschritt S 1 in einer Einrichtung 8 zur Analyse dergestalt analysiert, indem das Signal in seinem Zeitverlauf beobachtet wird. Dieses Beobachten kann in diesem ersten Fall in einfachster Weise mittels eines Weiterleitens des Signals durchgeführt werden. Es ist hierbei auch möglich, das Signal von kurzzeitigen Störungen zu unterscheiden, indem die zeitliche Ausdehnung des Signals festgestellt wird, wie weiter unten erläutert ist.

Das erste Beschleunigungssignal 3 wird dann in einem weiteren Verfahrensschritt S2 bearbeitet, was in einer Einrichtung 9 zur Bearbeitung vorzugsweise durch Integrieren in einer Integrationseinrichtung 16 erfolgt. Anschließend wird das integrierte Signal in einer ersten Vergleichseinrichtung 17 mit mindestens einem vorgebbaren Schwellwert in einem Teilschritt S2-1 verglichen. Dieser vorgebbare Schwellwert ist vorzugsweise in einer Speichereinrichtung 7 gespeichert. Er kann auch fahrzeugspezifisch aus einer in der Speichereinrichtung vorhandenen Tabelle abgerufen werden.

Ergibt sich bei diesem Vergleichen, dass das integrierte Signal des ersten Beschleunigungssignals 3 diesen vorgebbaren Schwellwert erreicht beziehungsweise überschreitet, so wird es in einem weiteren Teilschritt S2-2 ausgegeben und mit einem weiteren Signal plausibilisiert. Dieses weitere Signal ist in diesem ersten Beispiel in einfachster Ausführung das erste Beschleunigungssignal 3, welches unbearbeitet verwendet wird. Dieser Signalverlauf ist in der Figur 1 durch eine gestrichelte Linie dargestellt. Ist eventuell ein weiterer Sensor vorhanden, zum Beispiel ein dritter Sensor 12, welcher außerhalb des Steuergerätes 2 angeordnet ist, beispielsweise ein so genannter PAS-Sensor (Peripheral Acceleration System), so kann dessen Signal als unabhängiges Beschleunigungssignal 5 zum Plausibilisieren in einem Verfahrensschritt S3 in einer Einrichtung 14 zur Plausibilisierung des ersten Beschleunigungssignals 3 verwendet werden.

Das Plausibilisieren erfolgt in bekannter Weise in einem Teilschritt S3-1 und wird nicht weiter erläutert. Wird das integrierte erste Beschleunigungssignal 3 als ein Signal eines Überrollvorgangs des Fahrzeugs 23 erfolgreich plausibilisiert, so wird von einer Einrichtung 15 zum Bestimmen in einem Teilschritt S3-2 ein Signal oder Datenwort ausgegeben, welches zur Aktivierung von Zusatzfunktionen verwendet werden kann.

In dem zweiten Ausführungsbeispiel wird ein Überwachen einer Komponente der Erdbeschleunigung in einem lateralen Beschleunigungssignal vorgenommen, wobei das Plausibilisieren mit der Fahrzeuggeschwindigkeit erfolgt.

In dem Fall, dass sich ein Fahrzeug 23 bei einem Überschlag im freien Flug befindet und es auf dem Dach zu liegen kommt oder auf relativ weichem Untergrund abrollt, sind die auftretenden Beschleunigungen geringer als im ersten Ausführungsbeispiel, so dass der Bereich eines Überschlagwinkels um 180° ±30° und die so genannten "weichen Abroller" durch eine zusätzliche Funktion geprüft werden können. Hierbei ist das wesentliche Maß die Erdbeschleunigung, welche bei einem Überrollvorgang um 90° durch die y-Komponente, das heißt in Richtung der Querachse B-B in Figur 2, des Beschleunigungssignals 3 gemessen werden muss. Da der Überrollvorgang in diesem Fall in Bezug auf einen seitlichen Aufprall, einen so genannten "Seitencrash" lange andauert, bietet sich hier eine zeitliche Betrachtung bzw. Beobachtung der Beschleunigung in der Richtung der Querachse B-B des Fahrzeugs 23 an. Bei einer Lage des Fahrzeugs 23 auf der Seite, das heißt bei einem Überrollwinkel von 90°, steht die Querachse B-B des Fahrzeugs 23 senkrecht in Richtung der Erdbeschleunigung. Somit ergibt sich in dieser Stellung der größte Wert der Erdbeschleunigung im seitlichen Beschleunigungssignal. Die Beschleunigung wirkt relativ lange und konstant an. Dieses kann durch eine Auswertelogik algorithmisch erfasst und ausgewertet werden. Gleichfalls kann auch ein Beschleunigungssensor verwendet werden, welcher in Richtung der Hochachse des Fahrzeugs 23, beispielsweise in der z-Komponente, angeordnet ist. Dabei tritt in der Seitenlage 90° die Erdbeschleunigung nicht auf, sie ist zum Beschleunigungssignal in der y-Komponente um 90° versetzt.

Um diese Funktion gegenüber so genannten "Misuse"-Situationen, das sind zum Beispiel Signale, die beispielsweise durch kurze Schläge auf das Fahrzeug 23 erfolgen und nicht einem Überrollvorgang entsprechen, abzugrenzen, wird zusätzlich die Fahrzeuggeschwindigkeit herangezogen. Somit erhält man vorteilhaft eine zusätzliche Verbesserung, wobei aber sichergestellt werden muss, dass Misuse-Situationen deutlich von Überrollvorgängen unterschieden werden können, was beispielsweise durch einen Vergleich des Beschleunigungssignals mit einem Muster möglich ist.

Für dieses zweite Ausführungsbeispiel wird in dem Verfahrensschritt S1 in einem Teilschritt S1-1 das Beschleunigungssignal 3 mit zwei zeitlich aufeinanderfolgenden vorgebbaren zweiten und dritten Schwellwerten in einer ersten Vergleichseinrichtung 18 der Einrichtung 8 zur Analyse dergestalt analysiert, dass der zeitliche Verlauf der Erdbeschleunigung beobachtet wird, welche einen sinusförmigen Verlauf im Beschleunigungssignal erzeugt. Hier kann auch ein Vergleich mit einem Kurvenverlaufmuster erfolgen.

Wird bei dieser zeitlichen Beobachtung die Erdbeschleunigung in dem für einen Überrollvorgang charakteristischen Verlauf festgestellt, so wird ein weiteres Analysieren des Beschleunigungssignals 3 gestartet.

In einem Teilschritt S1-2 erfolgt diese weitere Analyse, indem das Beschleunigungssignal 3 nun mit einem vierten vorgebbaren Schwellwert und/oder einem Muster in einer dritten Vergleichseinrichtung 19 verglichen wird. Bei einem erfolgreichen Vergleich, das heißt, dass der Schwellwert erreicht oder überschritten wird, erfolgt der nächste Verfahrensschritt S2 Bearbeiten, bei welchem in einem Teilschritt S2-1 das Beschleunigungssignal 3 in einer Integrationseinrichtung 16 integriert und mit einem ersten vorgebbaren Schwellwert in einer ersten Vergleichseinrichtung 17 verglichen wird. Es ist auch möglich, dass dazu eine tieffrequente Filterung oder ein mitlaufender Zähler verwendet wird. Gleichzeitig erfolgt in einem parallel verlaufenden Teilschritt S2-2 ein Überprüfen der Dauer des Beschleunigungssignals in einer Einrichtung 20 zur Überprüfung und Vergleichen mit einem vorgebbaren fünften Schwellwert in einer vierten Vergleichseinrichtung 21.

Das Überprüfen erfolgt beispielsweise mittels eines mitlaufenden Zählers, der die Zeit ermittelt, in welcher das Beschleunigungssignal ansteht So können Misuses vorteilhaft erkannt werden, da deren charakteristische Signalbilder nur kurzfristig vorhanden sind. Es ist auch möglich, dass eine tieffrequente Filterung oder ein mitlaufender Zähler verwendet wird.

In einem Teilschritt S2-3 erfolgt mittels einer Einrichtung 22 zur logischen Verknüpfung das Weiterleiten der integrieren Signalwerte bei jeweils positiven Vergleichsergebnissen aus den Teilschritten S2-1 und S2-2.

In der Einrichtung 14 zur Plausibilisierung erfolgt dann ein Plausibilisieren in einem Teilschritt S3-1 mit einem Signal 6 der Fahrzeuggeschwindigkeit, welches im Fahrzeug 23 beispielsweise vom bekannten CAN-Bus oder einem separaten vierten Sensor 13 geliefert wird. Der weitere Verlauf nach erfolgreichem Plausibilisieren ist oben im ersten Beispiel bereits beschrieben.

In dem dritten Ausführungsbeispiel erfolgt eine Erweiterung des im zweiten Ausführungsbeispiel beschriebenen Verfahrens, wodurch dieses eine hohe Aktivierungswirksamkeit hoher Güte erreicht.

Da bei einer Drehung um 360° (zum Beispiel eine so genannte "Corkscrew" im Überrollvorgang die ersten beiden Funktionen je nach zeitlichem Ablauf keine Aktivierung ergeben können, wird eine Erweiterung des Verfahrens vorgenommen, indem auch ein Beschleunigungssignal 4 von einem zweiten Sensor 11 in Richtung der Hochachse, das heißt der z-Komponente, des Fahrzeugs 23 miteinbezogen wird. Verfügt das Fahrzeug 23 beispielsweise über zwei Sensoren, die sowohl in der Querachse B-B als auch in der Hochachse des Fahrzeugs 23 ausgerichtet sind, so lässt sich ebenfalls durch Überwachung der Erdbeschleunigungskomponente eine Funktion realisieren, welche auch bei einer kompletten Rotation des Fahrzeugs 23 bei einem Überrollvorgang ihre Funktion beibehält.

Bei einer Rotation um 360° muss der zweite Beschleunigungssensor 11 in Richtung der Hochachse des Fahrzeugs 23 wenigstens für einige Zeit eine negative Erdbeschleunigung messen. Diese sagt dann aus, dass das Fahrzeug 23 eine Rotation vollzogen hat.

Der Unterschied zu dem zweiten Ausführungsbeispiel liegt darin, dass nun zwei Beschleunigungssignale 3 und 4 gleichzeitig denselben Verfahrensschritten unterzogen werden:

In einem Teilschritt S1-1 werden zwei Beschleunigungssignale 3 und 4 mit jeweils zwei zeitlich aufeinanderfolgenden vorgebbaren zweiten und dritten Schwellwerten in ersten Vergleichseinrichtungen 18, 18' der Einrichtung 8 zur Analyse dergestalt analysiert, dass der zeitliche Verlauf der Erdbeschleunigung beobachtet wird, welche einen sinusförmigen Verlauf im Beschleunigungssignal erzeugt. Hier kann auch ein Vergleich mit einem Kurvenverlaufmuster erfolgen.

Wird bei dieser zeitlichen Beobachtung die Erdbeschleunigung in dem für einen Überrollvorgang charakteristischen Verlauf in beiden Beschleunigungssignalen 3 und 4 festgestellt, so wird ein weiteres Analysieren der Beschleunigungssignale 3 und 4 gestartet.

Im Teilschritt S1-2 erfolgt diese weitere Analyse, indem die Beschleunigungssignale 3 und 4 nun jeweils mit einem vierten vorgebbaren Schwellwert und/oder einem Muster in dritten Vergleichseinrichtung 19, 19' verglichen werden. Bei einem erfolgreichen Vergleich, das heißt, dass der jeweilige Schwellwert erreicht oder überschritten wird, erfolgt der nächste Verfahrensschritt S2 Bearbeiten, bei welchem in einem Teilschritt S2-1 die Beschleunigungssignale 3 und 4 in Integrationseinrichtungen 16, 16' integriert und mit jeweils einem ersten vorgebbaren Schwellwert in ersten Vergleichseinrichtungen 17, 17' verglichen werden. Gleichzeitig erfolgt in einem parallel verlaufenden Teilschritt S2-2 ein Überprüfen der Dauer der Beschleunigungssignale in Einrichtungen 20, 20' zur Überprüfung und Vergleichen mit jeweils einem vorgebbaren fünften Schwellwert in vierten Vergleichseinrichtung 21, 21'.

Das Überprüfen erfolgt wie im zweiten Ausführungsbeispiel beschrieben. Die Werte der Beschleunigungssignale 3 und 4 sollten jedoch im Rahmen gewisser Beschleunigungseinflüsse, die von der Restbewegung des Fahrzeugs 23 herrühren, zusammenpassen.
In einem Teilschritt S2-3 erfolgt mittels der Einrichtung 22 zur logischen Verknüpfung das Weiterleiten der integrieren Signalwerte bei jeweils positiven Vergleichsergebnissen aus den Teilschritten S2-1 und S2-2.

In der Einrichtung 14 zur Plausibilisierung erfolgt dann ein Plausibilisieren wie bereits im zweiten Ausführungsbeispiel beschrieben.

Alle Schwellwerte sind vorgebbar und können in der Speichereinrichtung 7 gespeichert sein. Sie können aber auch Muster beziehungsweise Kurvenverläufe, beispielsweise in Tabellenform, aufweisen.

Die Figur 2 zeigt eine beispielhafte Anordnung einer erfindungsgemäßen Vorrichtung in einem Fahrzeug 23 mit seiner Längsachse A-A und Querachse B-B. Die Längsachse A-A ist auch als x-Achse, die Querachse B-B als y-Achse bekannt. Die Hochachse des Fahrzeugs 23 steht senkrecht auf der Zeichnungsebene und wird auch als z-Achse bezeichnet.

Bei dieser Ausgestaltungsform weist die Steuereinrichtung 2 einen ersten Sensor 10 und einen zweiten Sensor 11 auf, wobei jeder die Beschleunigungen in zueinander orthogonalen Achse ermittelt, beispielsweise y- und x-Achse. Beide Sensoren 10 und 11 können auch als ein so genannter "bidirektionaler" Sensor ausgebildet sein.

Dritte Sensoren 12 befinden sich in der Seite des Fahrzeugs 23 als so genannte "Seitencrashsensoren".

Die erfindungsgemäße Vorrichtung 1 ist hier separat angeordnet. Sie kann aber auch Bestandteil der Steuereinrichtung 2 sein.

Die Erfindung ist nicht auf die oben beschriebenen Ausführungsbeispiele beschränkt, sondern auf vielfältige Art und Weise modifizierbar.

So ist es beispielsweise denkbar, dass nicht nur Zusatzfunktionen aktiviert werden, die nichtsicherheitsrelevant sind, sondern dass auch eine Aktivierung von sicherheitsrelevanten Funktionen beispielsweise in einer Minimalkonfiguration möglich ist, wodurch eine zusätzliche Schutzfunktion in einfacher aber sicherer Weise ermöglicht wird.

## Patentansprüche

1. Verfahren zum Aktivieren von Zusatzfunktionen bei einem Überrollvorgang eines Fahrzeugs (23) mit mindestens einem Sensor (10, 11, 12) und einer Steuereinrichtung (2), wobei der Sensor (10, 11, 12) wenigstens ein unidirektionales Beschleunigungssignal (3, 4, 5) liefert, mit folgenden Verfahrensschritten:
(S1) Analysieren mindestens eines Beschleunigungssignals (3, 4) in seinem Zeitverlauf, indem das mindestens eine Beschleunigungssignal (3, 4) in seinem Zeitverlauf beobachtet wird;
(S2) Bearbeiten von analysierten Werten des mindestens einen Beschleunigungssignals (3, 4);
(S3) Plausibilisieren der bearbeiteten Werte mit einem Signalwert (3, 5, 6); und
(S4) Aktivieren mindestens einer Zusatzfunktion bei einem Überrollvorgang des Fahrzeugs (23) anhand der plausibilisierten Werte,
**dadurch gekennzeichnet,**
**dass** im Verfahrensschritt (S2) ein Integrieren des Beschleunigungssignals (3, 4) erfolgt, und dass der Verfahrensschritt (S2) weitere folgende Teilschritte aufweist:
(S2-1) Vergleichen von integrierten Werten des Beschleunigungssignals (3, 4) mit mindestens einem vorgebbaren *ersten* Schwellwert; und
(S2-2) Ausgeben von integrierten Werten in Abhängigkeit des Vergleichens, dass der Verfahrensschritt (S3) folgende Teilschritte aufweist;
(S3-1) Plausibilisieren der im Teilschritt (S2-2) ausgegebenen Werte mit dem nicht bearbeiteten Beschleunigungssignal (3) oder einem unabhängigen Beschleunigungssignal (5) eines weiteren Sensors (12); und
(S3-2) Ausgeben eines Signals oder Datenworts nach erfolgreichem Plausibilisieren.

2. Verfahren nach Anspruch 1,
**dadurch gekennzeichnet,**
**dass** der Verfahrensschritt (S1) folgende Teilschritte aufweist:
(S1-1) Vergleichen des Beschleunigungssignals (3, 4) mit mindestens zwei zeitlich aufeinanderfolgenden vorgebbaren zweiten und dritten Schwellwerten und Aktivieren eines weiteren zeitlichen Analysierens des Beschleunigungssignals (3, 4) bei positivem Vergleichsergebnis; und
(S1-2) Vergleichen des Beschleunigungssignals (3, 4) mit einem vorgebbaren vierten Schwellwert und/oder einem Muster und Aktivieren des nächsten Verfahrensschritts bei positivem Vergleichsergebnis.

3. Verfahren nach Anspruch 2,
**dadurch gekennzeichnet,**
**dass** der Verfahrensschritt (S2) folgende Teilschritte aufweist:
(S2-3) Gleichzeitiges Überprüfen der Signaldauer des Beschleunigungssignals (3, 4) und Vergleichen der Signaldauer mit einem vorgebbaren fünften Schwellwert; und
(S2-4) Weiterleiten der integrierten Signalwerte bei positiven Vergleichsergebnissen aus den beiden Teilschritten (S2-1) und (S2-3).

4. Verfahren nach Anspruch 3,
**dadurch gekennzeichnet,**
**dass** der Verfahrensschritt (S3) folgende Teilschritte aufweist:
(S3-3) Plausibilisieren der im Teilschritt (S2-4) ausgegebenen Werte mit einem Signal (6) der Fahrzeuggeschwindigkeit; und
(S3-4) Ausgeben eines Signals oder Datenworts nach erfolgreichem Plausibilisieren.

5. Verfahren nach Anspruch 1,
**dadurch gekennzeichnet,**
**dass** der Verfahrensschritt (S1) folgende Teilschritte aufweist:
(S1-3) Vergleichen von zwei unabhängigen Beschleunigungssignalen (3, 4), mit jeweils mindestens zwei zeitlich aufeinanderfolgenden vorgebbaren zweiten und dritten Schwellwerten und Aktivieren von weiterem zeitlichen Analysieren dieser Beschleunigungssignale (3, 4) bei positiven Vergleichsergebnissen; und
(S1-4) Vergleichen dieser Beschleunigungssignale (3, 4) jeweils mit einem vorgebbaren vierten Schwellwert und/oder einem Muster und Aktivieren des nächsten Verfahrensschritts bei positiven Vergleichsergebnissen.

6. Verfahren nach Anspruch 5,
**dadurch gekennzeichnet,**
**dass** die zwei unabhängigen Beschleunigungssignale (3, 4) jeweils Signale einer Beschleunigung in Richtung der Querachse und einer Beschleunigung in Richtung der Hochachse des Fahrzeugs (23) sind.

7. Verfahren nach Anspruch 5 oder 6,
**dadurch gekennzeichnet,**
**dass** der Verfahrensschritt (S2) folgende Teilschritte aufweist:
(S2-5) Gleichzeitiges Überprüfen der Signaldauer beider Beschleunigungssignale (3, 4) und Vergleichen der Signaldauern jeweils mit einem vorgebbaren fünften Schwellwert; und
(S2-6) Weiterleiten der integrierten Signalwerte bei positiven Vergleichsergebnissen aus beiden Teilschritten (S2-1) und (S2-5).

8. Verfahren nach Anspruch 7,
**dadurch gekennzeichnet,**
**dass** der Verfahrensschritt (S3) folgende Teilschritte aufweist:
(S3-5) Plausibilisieren der im Teilschritt (S2-3) ausgegebenen Werte mit einem Signal (6) der Fahrzeuggeschwindigkeit; und
(S3-6) Ausgeben eines Signals oder Datenworts nach erfolgreichem Plausibilisieren.

9. Verfahren nach einem der Ansprüche 1 bis 8;
**dadurch gekennzeichnet,**
**dass** die vorgebbaren Schwellwerte und Muster in einer Speichereinrichtung gespeichert sind.

10. Vorrichtung (1) zum Aktivieren von Zusatzfunktionen bei einem Überrollvorgang eines Fahrzeugs (23) mit mindestens einem Sensor (10, 11, 12) und einer Steuereinrichtung (2), wobei der Sensor (10, 11, 12) wenigstens ein unidirektionales Beschleunigungssignal (3, 4, 5) liefert, wobei die Vorrichtung (1) Folgendes aufweist:
- mindestens eine erste Einrichtung (8) zur Analyse mindestens eines Beschleunigungssignals (3, 4), indem das mindestens eine Beschleunigungssignal (3, 4) in seinem Zeitverlauf beobachtet wird;
- mindestens eine zweite Einrichtung (9) zur Bearbeitung von Werten des mindestens einen Beschleunigungssignals (3, 4);
- eine dritte Einrichtung (14) zur Plausibilisierung der bearbeiteten Werte;
eine vierte Einrichtung (15) zur Bestimmung eines Überrollvorgangs des Fahrzeugs (23) und zur Aktivierung von nicht-sicherheitsrelevanten Zusatzfunktionen; und
**dadurch gekennzeichnet,**
- **dass** mindestens eine Speichereinrichtung (7) zur Speicherung von Daten für vorgebbare Schwellwerte und/oder Muster, dass die zweite Einrichtung (9) zur Bearbeitung eine Integrationseinrichtung (16, 16') oder eine Filtereinrichtung für je ein Beschleunigungssignal (3, 4) und jeweils eine erste Vergleichseinrichtung (17, 17') aufweist, wobei die dritte Einrichtung (14) derart konfiguriert ist, dass die dritte Einrichtung (14) aus der zweiten Einrichtung (9) ausgegebene integrierte Werte mit dem nicht bearbeiteten Beschleunigungssignal (3) oder einem unabhängigen Beschleunigungssignal (5) eines weiteren Sensors (12) plausibilisiert und ein Signal oder Datenwert nach erfolgreichem Plausibilisieren angibt.

11. Vorrichtung nach Anspruch 10,
**dadurch gekennzeichnet,**
**dass** die erste Einrichtung (8) zur Analyse eine zweite Vergleichseinrichtung (18, 18') zum Vergleich des Beschleunigungssignals (3, 4) mit zwei unabhängigen vorgebbaren zweiten und dritten Schwellwerten und eine dritte Vergleichseinrichtung (19, 19') mit einem vorgebbaren vierten Schwellwert und/oder vorgebbaren Muster aufweist, wobei die zweite Einrichtung (9) zum Bearbeiten zusätzlich eine fünfte Einrichtung (20, 20') zum Überprüfen der Signaldauer je eines Beschleunigungssignals (3, 4) und jeweils eine vierte Vergleichseinrichtung (21, 21') und eine sechste Einrichtung (22) zur logischen Verknüpfung von Vergleichsergebnissen der ersten und vierten Vergleichseinrichtungen (17, 17', 21, 21') aufweist.

12. Vorrichtung nach einem der Ansprüche 10 bis 12,
**dadurch gekennzeichnet,**
**dass** der Sensor (10, 11) mindestens als ein bidirektionaler Sensor ausgebildet ist.

13. Vorrichtung nach einem der Ansprüche 8 bis 15,
**dadurch gekennzeichnet,**
**dass** die Einrichtungen (7, 8, 9, 14, 15) der Vorrichtung (1) zentral in der Steuereinrichtung (2) oder separat im Fahrzeug (23) angeordnet sind.

## Claims

1. Method for activating additional functions during a rollover process of a vehicle (23) having at least one sensor (10, 11, 12) and a control device (2), wherein the sensor (10, 11, 12) supplies at least one unidirectional acceleration signal (3, 4, 5), comprising the following method steps:
(S1) analyzing at least one acceleration signal (3, 4) in its time profile by observing the at least one acceleration signal (3, 4) in its time profile;
(S2) processing analyzed values of the at least one acceleration signal (3, 4);
(S3) checking the plausibility of the processed values with a signal value (3, 5, 6); and
(S4) activating at least one additional function during a rollover process of the vehicle (23) using the values whose plausibility has been checked,
**characterized**
**in that** in the method step (S2) the acceleration signal (3, 4) is integrated, and in that the method step (S2) has the further following substeps:
(S2-1) comparison of integrated values of the acceleration signal (3, 4) with at least one predefinable first threshold value; and
(S2-2) outputting of integrated values as a function of the comparison, in that the method step (S3) has the following substeps;
(S3-1) checking the plausibility of the values output in substep (S2-2) with the non-processed acceleration signal (3) or an independent acceleration signal (5) of a further sensor (12); and
(S3-2) outputting a signal or data word after successful plausibility checking.

2. Method according to Claim 1,
**characterized**
**in that** the method step (S1) has the following substeps:
(S1-1) comparison of the acceleration signal (3, 4) with at least two chronologically successive, predefinable second and third threshold values and activation of a further chronological analysis of the acceleration signal (3, 4) in the event of a positive comparison result; and
(S1-2) comparison of the acceleration signal (3, 4) with a predefinable fourth threshold value and/or a pattern, and activation of the next method step in the event of a positive comparison result.

3. Method according to Claim 2,
**characterized**
**in that** the method step (S2) has the following substeps:
(S2-3) simultaneous checking of the signal length of the acceleration signal (3, 4) and comparison of the signal length with a predefinable fifth threshold value; and
(S2-4) passing on of the integrated signal values in the event of positive comparison results from the two substeps (S2-1) and (S2-3).

4. Method according to Claim 3,
**characterized**
**in that** the method step (S3) has the following substeps:
(S3-3) checking the plausibility of the values output in substep (S2-4) with a signal (6) for the speed of the vehicle; and
(S3-4) outputting of a signal or data word after successful plausibility checking.

5. Method according to Claim 1,
**characterized**
**in that** the method step (1) has the following substeps:
(S1-3) comparison of two independent acceleration signals (3, 4) with in each case at least two chronologically successive, predefinable second and third threshold values, and activation of further chronological analysis of these acceleration signals (3, 4) in the event of positive comparison results; and
(S1-4) comparison of these acceleration signals (3, 4) in each case with a predefinable fourth threshold value and/or a pattern and activation of the next method step in the event of positive comparison results.

6. Method according to Claim 5,
**characterized**
**in that** the two independent acceleration signals (3, 4) are each signals for an acceleration in the direction of the transverse axis and an acceleration in the direction of the vertical axis of the vehicle (23).

7. Method according to Claim 5 or 6,
**characterized**
**in that** the method step (S2) has the following substeps:
(S2-5) simultaneous checking of the signal length of the two acceleration signals (3, 4) and comparison of the signal lengths with in each case a predefinable fifth threshold value; and
(S2-6) passing on of the integrated signal values in the event of positive comparison results from the two substeps (S2-1) and (S2-5).

8. Method according to Claim 7,
**characterized**
**in that** the method step (S3) has the following substeps:
(S3-5) checking of the plausibility of the values which are output in substep (S2-3) with a signal (6) for the speed of the vehicle; and
(S3-6) outputting of a signal or data word after successful plausibility checking.

9. Method according to one of Claims 1 to 8,
**characterized**
**in that** the predefinable threshold values and patterns are stored in a memory device.

10. Apparatus (1) for activating additional functions during a rollover process of a vehicle (23) having at least one sensor (10, 11, 12) and a control device (2), wherein the sensor (10, 11, 12) supplies at least one unidirectional acceleration signal (3, 4, 5), wherein the apparatus (1) has the following:
- at least one first device (8) for analyzing at least one acceleration signal (3, 4) in that the at least one acceleration signal (3, 4) is observed in its time profile; and
- at least one second device (9) for processing values of the at least one acceleration signal (3, 4);
- a third device (14) for checking the plausibility of the processed values;
a fourth device (15) for determining a rollover process of the vehicle (23) and for activating non-safety-relevant additional functions; and
**characterized**
**in that** at least one memory device (7) for storing data for predefinable threshold values and/or patterns, in that the second processing device (9) has an integration device (16, 16') or a filter device for in each case one acceleration signal (3, 4) and in each case a first comparison device (17, 17'), wherein the third device (14) is configured in such a way that the third device (14) checks the plausibility of integrated values which are output -from the second device (9) with the non-processed acceleration signal (3) or an independent acceleration signal (5) of a further sensor (12) and specifies a signal or data value after successful plausibility checking.

11. Apparatus according to Claim 10,
**characterized**
**in that** the first analysis device (8) has a second comparison device (18, 18') for comparing the acceleration signal (3, 4) with two independent predefinable second and third threshold values, and a third comparison device (19, 19') with a predefinable fourth threshold value and/or predefinable pattern,
wherein the second processing device (9) additionally has a fifth device (20, 20') for checking the signal length of in each case one acceleration signal (3, 4) and in each case a fourth comparison device (21, 21') and a sixth device (22) for logically combining comparison results of the first and fourth comparison devices (17, 17', 21, 21').

12. Apparatus according to one of Claims 10 to 12,
**characterized**
**in that** the sensor (10, 11) is embodied as at least one bidirectional sensor.

13. Apparatus according to one of Claims 8 to 15,
**characterized**
**in that** the devices (7, 8, 9, 14, 15) of the apparatus (1) are arranged centrally in the control device (2) or separately in the vehicle (23).

## Revendications

1. Procédé pour activer les fonctions supplémentaires en cas de retournement d'un véhicule 23 ayant au moins un capteur 10, 11, 12 et une installation de commande 2, le capteur 10, 11, 12 fournissant au moins un signal d'accélération unidirectionnel 3, 4, 5, comprenant les étapes suivantes :
(S1) analyse de la variation dans le temps d'au moins un signal d'accélération 3, 4 pour l'observation de la variation dans le temps de ce signal d'accélération 3, 4,
(S2) traitement des valeurs analysées de ce signal d'accélération 3, 4,
(S3) contrôle de plausibilité des valeurs traitées avec une valeur de signal 3, 5, 6, et
(S4) activation d'au moins une fonction supplémentaire en cas de retournement du véhicule 23 à l'aide des valeurs rendues plausibles,
**caractérisé en ce que**
Dans l'étape de procédé S2 on intègre le signal d'accélération 3, 4 et l'étape de procédé S2 comprend les sous-étapes suivantes :
(S2-1) comparaison des valeurs intégrées du signal d'accélération 3, 4 à au moins un premier seuil prédéfini, et
(S2-2) émission de valeurs intégrées en fonction de la comparaison, l'étape de procédé S3 comprenant les sous-étapes suivantes :
(S3-1) contrôle de plausibilité des valeurs émises dans l'étape partielle S2-2 au signal d'accélération traité 3 ou avec un signal d'accélération 5 indépendant d'un autre capteur 12, et
(S3-2) émission d'un signal et d'un mot de données après le contrôle de plausibilité réussi.

2. Procédé selon la revendication 1,
**caractérisé en ce que**
l'étape de procédé S1 comprend les sous-étapes suivantes :
(S1-1) Comparaison du signal d'accélération 3, 4 à au moins deux seuils prédéfinis successifs un second et un troisième seuil et activation d'une autre analyse dans le temps du signal d'accélération 3, 4 pour un résultat de comparaison positif, et
(S1-2) Comparaison du signal d'accélération 3, 4 à un quatrième seuil prédéfini et/ ou un modèle et activation de l'étape de procédé suivante en cas de résultat positif de la comparaison.

3. Procédé selon la revendication 2,
**caractérisé en ce que**
l'étape de procédé S2 comprend les sous-étapes suivantes :
(S2-3) Contrôle simultané de la durée du signal d'accélération 3, 4 et comparaison de la durée du signal avec un cinquième seuil prédéfini, et
(S2-4) Transmission des valeurs de signal intégré pour des résultats de comparaison positifs à partir des deux sous-étapes S2-1 et S2-3.

4. Procédé selon la revendication 3,
**caractérisé en ce que**
l'étape de procédé S3 comprend les sous-étapes suivantes :
(S3-3) Contrôle de plausibilité des valeurs émises dans la sous-étape S2-4 avec un signal 6 de la vitesse du véhicule, et
(S3-4) Emission d'un signal ou d'un mot de données après réussite du contrôle de plausibilité.

5. Procédé selon la revendication 1,
**caractérisé en ce que**
l'étape de procédé S 1 comprend les sous-étapes suivantes :
(S1-3) Comparaison de deux signaux d'accélération indépendants 3, 4 à chaque fois au moins deux seuils successifs dans le temps, prédéfinis, un second et un troisième seuil et activation d'autres analyses dans le temps de ces signaux d'accélération 3, 4 en cas de résultat positif de la comparaison, et
(S1-4) Comparaison des signaux d'accélération 3, 4 chaque fois à un quatrième seuil prédéfini et/ ou un modèle et activation de l'étape de procédé suivante en cas de résultat positif de la comparaison.

6. Procédé selon la revendication 5,
**caractérisé en ce que**
les seconds signaux d'accélération indépendants 3, 4 sont des signaux d'une accélération dans la direction de l'axe transversal et d'une accélération dans la direction de l'axe vertical du véhicule 23.

7. Procédé selon l'une quelconque des revendications 5 et 6,
**caractérisé en ce que**
l'étape de procédé S2 comprend les sous-étapes suivantes :
(S2-5) Contrôle simultané de la durée des deux signaux d'accélération 3, 4 et comparaison des durées des signaux chaque fois à un cinquième seuil prédéfini, et
(S2-6) Transmission des valeurs des signaux intégrés en cas de résultat positif de la comparaison à partir des deux étapes partielles S2-1 et S2-5.

8. Procédé selon la revendication 7,
**caractérisé en ce que**
l'étape de procédé S3 comprend les sous-étapes suivantes :
(S3-5) Contrôle de plausibilité des valeurs émises dans la sous-étape S2-3 à un signal 6 de la vitesse du véhicule, et
(S3-6) Emission d'un signal ou d'un mot de données pour un contrôle de plausibilité réussi.

9. Procédé selon l'une quelconque des revendications 1 à 8,
**caractérisé en ce que**
les seuils prédéfinis et les modèles sont enregistrés dans une mémoire.

10. Dispositif 1 pour activer les fonctions supplémentaires en cas de retournement d'un véhicule 23 avec au moins un capteur 10, 11, 12 et une installation de commande 2, le capteur 10, 11, 12 fournissant au moins un signal d'accélération 3, 4, 5 unidirectionnel,
le dispositif 1 comprenant les moyens suivants :
- au moins une première installation 8 pour analyser au moins un signal d'accélération 3, 4 par l'observation de la variation dans le temps de ce signal d'accélération 3, 4,
- au moins une seconde installation 9 pour traiter les valeurs du signal d'accélération 3, 4,
- une troisième installation 14 pour contrôler la plausibilité des valeurs observées,
- une quatrième installation 15 pour déterminer une phase de retournement du véhicule 23 et activer les fonctions supplémentaires non concernées par la sécurité, et
**caractérisé par**
- au moins une mémoire 7 pour enregistrer les données de seuil et/ou de modèle prédéfini,
la seconde installation 9 ayant une installation d'intégration 16, 16', une installation de filtre pour chaque signal d'accélération 3, 4 et chaque fois une première installation de comparaison 17, 17',
la troisième installation 14 étant configurée pour qu'à partir des valeurs intégrées fournies par la seconde installation 9 elle contrôle la plausibilité de ces valeurs avec le signal d'accélération 3 non traité ou avec un signal d'accélération 5 indépendant, d'un autre capteur 12 et elle fournit un signal ou un mot de données si le contrôle de plausibilité a réussi.

11. Dispositif selon la revendication 10,
**caractérisé en ce que**
la première installation 8 comporte pour l'analyse, une seconde installation de comparaison 18, 18' pour comparer le signal d'accélération 3, 4 à deux seuils indépendants prédéfinis, un second et un troisième seuil et une troisième installation de comparaison 19, 19' avec un quatrième seuil prédéfini et/ ou un modèle prédéfini,
la seconde installation 9 ayant pour le traitement en plus une cinquième installation 20, 20' pour vérifier la durée de chaque signal d'accélération 3, 4 et chaque fois une quatrième installation de comparaison 21, 21' et une sixième installation 22 pour combiner logiquement les résultats de comparaison de la première et de la quatrième installation de comparaison 17, 17', 21, 21'.

12. Dispositif selon l'une quelconque des revendications 10 et 11,
**caractérisé en ce que**
le capteur 10, 11 est au moins réalisé comme capteur bidirectionnel.

13. Dispositif selon l'une quelconque des revendications 8 à 15,
**caractérisé en ce que**
les installations 7, 8, 19, 14, 15 du dispositif 1 sont prévues de manière centrale dans l'installation de commande 2, séparément dans un véhicule 23.
